# EUROPÄISCHE PATENTSCHRIFT

(11) **EP 1 012 542 B1**
(45) Veröffentlichungstag und Bekanntmachung des Hinweises auf die Patenterteilung: **26.05.2004**
(21) Anmeldenummer: 96945742.3
(22) Anmeldetag: 21.11.1996
(51) Int. Cl.: G01F 1/68

(54) **EINRICHTUNG ZUR BESTIMMUNG DES DURCHSATZES EINES STRÖMENDEN MEDIUMS**
DEVICE FOR DETERMINING THE FLOW RATE OF A MOVING FLUID
DISPOSITIF POUR LA DETERMINATION DU DEBIT D'UN FLUIDE EN ECOULEMENT

(30) Priorität: 31.01.1996 DE 19603340
(43) Veröffentlichungstag der Anmeldung: 28.06.2000
(73) Patentinhaber: ROBERT BOSCH GMBH, 70442 Stuttgart (DE)
(72) Erfinder: WERNER, Peter, D-75446 Wiernsheim (DE); STRÖBELE, Hans-Peter, D-70195 Stuttgart (DE); KLEINHANS, Josef, D-71665 Vaihingen (DE); HESS, Gottfried, D-72800 Eningen (DE); JOOS, Klaus, D-74399 Walheim (DE); ZIMMERMANN, Christian, D-72072 Tübingen (DE); SAX, Claus, D-75671 Gaggenau (DE); SPACHMANN, Jürgen, D-74372 Sersheim (DE); STAACKE, Albert, D-71711 Murr (DE); KONZELMANN, Uwe, D-71679 Asperg (DE)
(86) Internationale Anmeldenummer: PCT/DE1996/002216
(87) Internationale Veröffentlichungsnummer: WO 1997/028425

(56) Entgegenhaltungen:
- EP-A- 0 589 211
- DE-A- 3 637 538
- DE-A- 3 938 286
- US-A- 4 872 339

## Beschreibung

### Stand der Technik

Die Erfindung betrifft eine Einrichtung zur Bestimmung des Durchsatzes eines strömenden Mediums, insbesonders der von einer Brennkraftmaschine angesaugten Luftmasse, die mit Hilfe eines Heißfilmsensors ermittelt wird, nach der Gattung des Hauptanspruchs.

Zur Ermittlung des Durchsatzes eines strömenden Mediums, beispielsweise der von einer Brennkraftmaschine angesaugten Luftmasse werden üblicherweise temperaturgeregelt geheizte Meßwiderstände eingesetzt, die vom vorbeiströmenden Medium gekühlt werden. Der Meßwiderstand ist dabei üblicherweise Teil einer elektrischen Brückenschaltung, er wird durch einen Strom auf eine gegenüber dem strömenden Medium erhöhte Betriebstemperatur geheizt. Der zur Konstanthaltung benötigte Heizstrom ist ein Maß für das strömende Medium.

Wird die bekannte Vorgehensweise zur Ermittlung des Durchflusses eines strömenden Mediums in einer Brennkraftmaschine eingesetzt, läßt sich also die von der Brennkraftmaschine angesaugte Luftmasse ermitteln. In Abhängigkeit von der ermittelten Luftmasse werden vom Steuergerät der Brennkraftmaschine die für die optimale Regelung zum Beispiel der Einspritzung benötigten Steuersignale berechnet.

Aus der DE-OS 39 38 286 sind Verfahren und Vorrichtungen zur Bestimmung des Durchsatzes eines strömenden Mediums bekannt, bei denen ein Heizelement durch Zuführen eines regelbaren Stromes auf eine konstante Temperatur gebracht wird, die höher ist als die Temperatur des strömenden Mediums. Das Sensorelement wird dem strömenden Medium ausgesetzt und von diesem abgekühlt. Die Regelung wird mit Hilfe eines eigenen Mikrocontrollers durchgeführt, der aus dem benötigten Heizstrom die Masse des strömenden Mediums ermittelt. Bei der bekannten Einrichtung laufen die gesamten Berechnungen im eigenen Mikrocontroller ab. Dieser gibt die berechneten Größen an ein Steuergerät weiter, das daraus Steuerimpulse für die Regelung der Brennkraftmaschine berechnet. Das bekannte Verfahren bzw. die bekannte Vorrichtung hat den Nachteil, daß einige Bestandteile der Auswerteelektronik doppelt vorhanden sein müssen, nämlich für den Mikrocontroller und für das nachfolgende Steuergerät. Dabei handelt es sich insbesonders um Mittel zur Erzeugung einer stabilisierten Referenzspannung, die doppelt vorhanden sein müssen. Eine ähnliche Offenbarung läßt sich der DE 36 37 538 entnehmen.

Die EP 589 211 offenbart einen Massenflußsensor mit einem Mikrocontroller, der eine serielle Schnittstelle aufweist, die einem Abgleich dient.

Die US-PS 4,872,339 zeigt einen Luftmassenmesser für eine Brennkraftmaschine mit eine einen Mikroprozessor Umfassenden Signalauswertung, die ein für die Regelung einer Größe der Brennkraftmaschine nutzbares Signal erzeugt.

### Vorteile der Erfindung

Die erfindungsgemäße Einrichtung zur Bestimmung des Durchsatzes eines strömenden Mediums mit den Merkmalen des Anspruchs 1 hat dem gegenüber den Vorteil, daß der Sensoraufbau sehr einfach sein kann ohne große Auswerteelektronik, weiterhin ist vorteilhaft, daß aufwendige Abgleichverfahren, bei denen die Widerstandswerte der einzelnen Widerstände der Sensorbrücke getrimmt werden, beispielsweise durch Lasertrimmen, entfallen können.

Erzielt werden diese Vorteile, indem eine Anordnung vorgesehen ist, bei der der Sensor und das Steuergerät sich zueinander in räumlicher Nähe befinden und die komplette Signalverarbeitung zur Auswertung des Ausgangssignales des Sensors im Steuergerät bzw. im Mikrocontroller des Steuergerätes selbst abläuft, wobei das Steuergerät nicht nur die Signalverarbeitung des vom Sensor gelieferten Signales übernimmt, sondern auch Steuersignale berechnet, die auf Grund des gemessenen Durchsatzes optimal an die Erfordernisse anpaßbar sind.

Bei einem Luftmassenmesser, mit dessen Hilfe die von einer Brennkraftmaschine angesaugte Luftmasse ermittelt werden soll, erfolgt die Auswertung der Sensorsignale im Steuergerät der Brennkraftmaschine, das aus der ermittelten Luftmasse die für die Regelung der Brennkraftmaschine erforderlichen Daten bzw. Ansteuersignale berechnet und somit insbesonders eine optimale Kraftstoffeinspritzung ermöglicht.

Weitere Vorteile der Erfindung bestehen darin, daß einfache Softwareabgleiche mittels Programmierung möglich sind. Durch die Integration Sensor, Steuergerät und Saugrohr kann die Erfassung der Luftmasse bei einer Brennkraftmaschine mit einem intelligenten Abgleichkonzept besonders genau erfolgen. Der Abgleich kann dabei in vorteilhafter Weise durch Stimulation von außen, beispielsweise über eine serielle Schnittstelle des Mikroprozessors bzw. des Mikrocontrollers durchgeführt werden, es sind somit keine teueren Abgleicheinrichtungen notwendig.

### Zeichnung

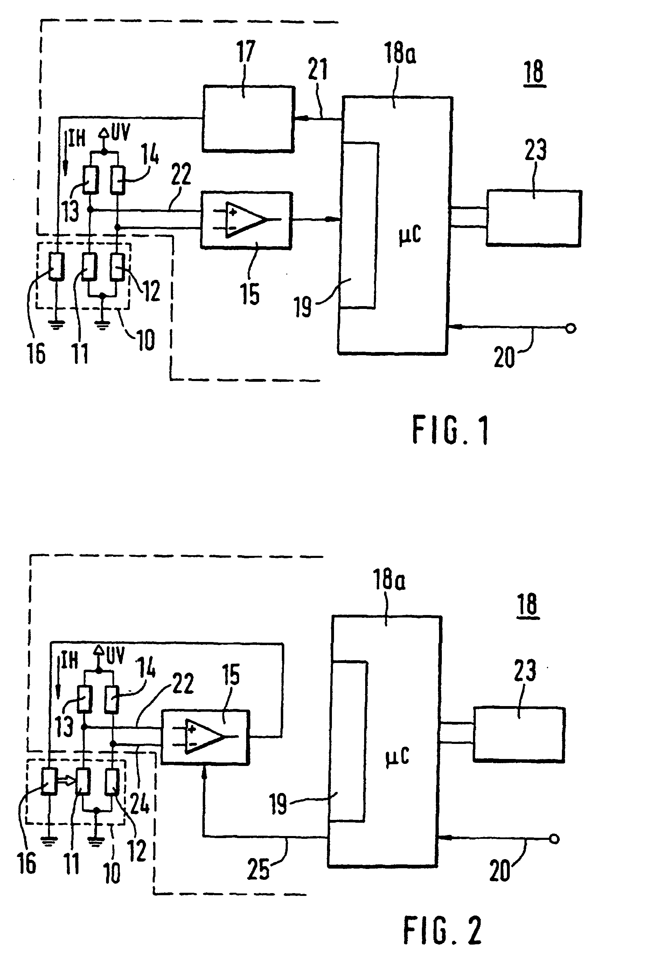

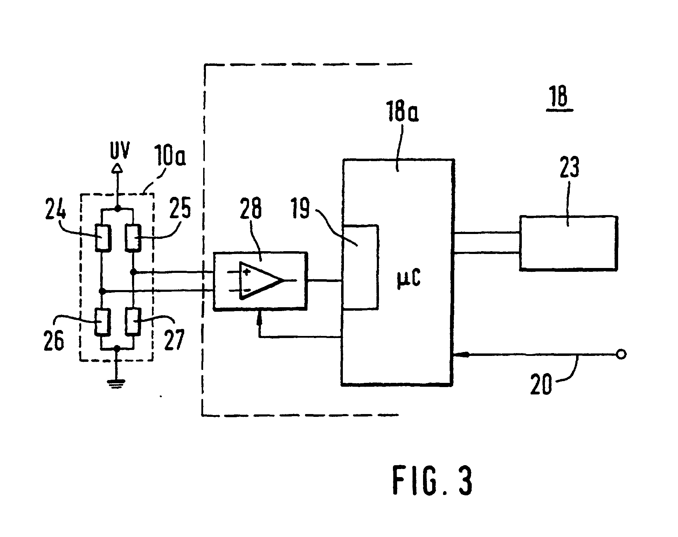

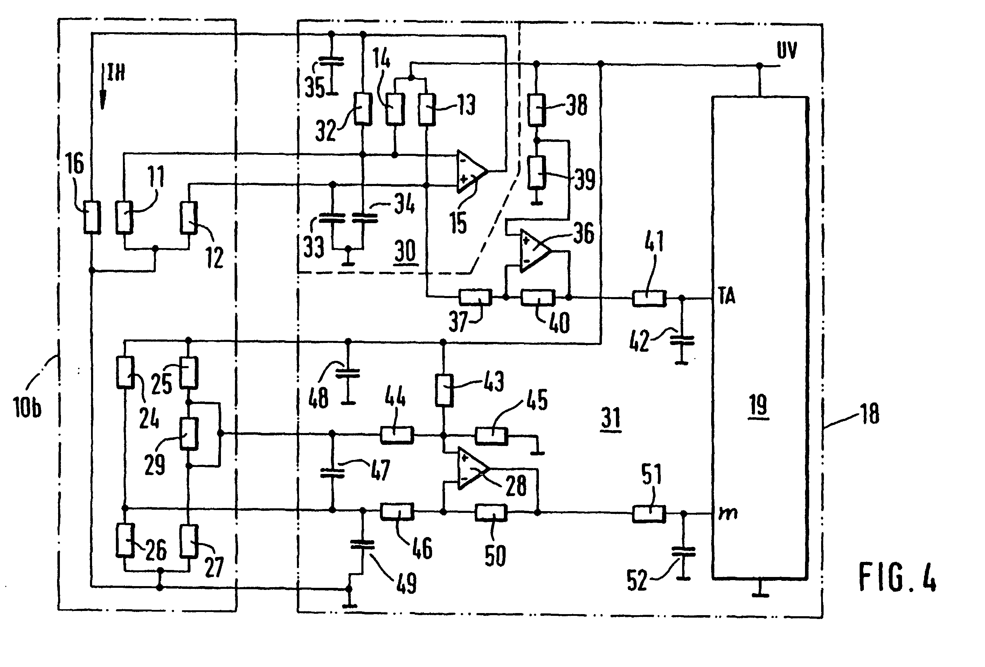

Ausführungsbeispiele der Erfindung sind in der Zeichnung dargestellt und werden in der nachfolgenden Beschreibung näher erläutert. Im einzelnen zeigt Figur 1 ein Blockschaltbild einer Anordnung bei der der Übertemperatur-Abgleich mittels eines digitalen Reglers erfolgt. In Figur 2 ist ein Blockschaltbild für einen Übertemperatur-Abgleich mit einem analogen Regler mit digitaler Korrektur dargestellt und in Figur 3 ist ein Blockschaltbild für ein Ausführungsbeispiel mit digitalem Abgleich eines analogen Verstärkers aufgetragen. In Figur 4 ist ein Ausführungsbeispiel dargestellt, das nähereungsweise einer Kombination der Lösungen nach Figur 1 bzw. 2 und 3 entspricht. Gleiche Bauteile sind in den Figuren 1 bis 3 zumindest dort wo es sinnvoll erschien mit gleichen Bezugszeichen versehen.

### Beschreibung

### 1. Heizregelkreis

Durchflußmesser, beispielsweise Luftmassensensoren nach dem thermischen Prinzip benutzen den Effekt, daß ein aufgeheiztes Meßlement (Sensorelement) durch das vorbeiströmende Medium, beispielsweise die angesaugte Luft einer Brennkraftmaschine, abgekühlt wird. Die dem Meßelement entzogene Wärmemenge ist somit ein Maß für die vorbeiströmende Luftmasse pro Zeiteinheit.

Um die Sensoreigenschaften, besonders die Empfindlichkeit und die Dynamik in gewissen Grenzen zu halten ist es erforderlich, die Übertemperatur des Sensorelementes bezüglich der Temperatur des zu erfassenden Mediums auf einen definierten Wert einzustellen. Eine solche Einstellung kann durch aufwendige Widerstandsabgleiche, beispielsweise durch Lasertrimmen, erfolgen.

Die erfindungsgemäße Vorgehensweise besteht jedoch darin, ein Abgleichverfahren durchzuführen, bei dem keine widerstandsändernden Abgleiche erforderlich sind und bei dem der vorgegebene Sollwert in einem Festwertspeicher des Steuergerätes abgelegt wird. Der Abgleich selbst kann dabei von außen über die vorhandene serielle Schnittstelle des Steuergerätes gesteuert werden. Zur Konstanthaltung der Sensorübertemperatur ist ein Regler vorgesehen, der entweder analog oder digital realisiert werden kann.

In Figur 1 ist ein Ausführungsbeispiel der Erfindung dargestellt, bei dem der Abgleich mittels eines digitalen Reglers erfolgt. Der Sensor, der dem strömenden Medium ausgesetzt wird, umfaßt ein Sensorelement 10, er setzt sich zusammen aus dem Meßwiderstand 11 sowie einem parallel geschaltetem Widerstand 12, wobei der Meßwiderstand 11 und der Meßwiderstand 12 mit zwei weiteren Widerständen 13, 14 zu einer Brücke verschaltet sind, deren eine Diagonale zwischen Versorgungsspannung UV und Masse liegt, während die andere Brückendiagonale mit den beiden Eingängen des Verstärkers 15 verbunden ist. Dieser Verstärker 15 ist beim Ausführungsbeispiel nach Figur 1 ein einfacher Verstärker mit fester Verstärkung.

Bestandteil des Sensorelements 10 ist ein Heizwiderstand 16, der zwischen einer Endstufe 17 und Masse liegt. Von der Endstufe 17 wird dem Heizwiderstand 16 ein Heizstrom IH zugeführt, der den Heizwiderstand 16 erwärmt. Da der Heizwiderstand 16 in räumlicher Nähe zum Meßwiderstand 11 liegt, wird dieser ebenfalls erwärmt.

Die Regelung des Heizstromes IH erfolgt mit Hilfe des Steuergerätes 18, das über einen Analog-/Digital- Wandler 19 mit dem Ausgang des Verstärkers 15 in Verbindung steht. Dem Steuergerät 18 zugeordnet ist ein Speicher 19, über einen Eingang 20 kann ein Software Abgleich bzw. eine Programmierung des Steuergerätes 18 erfolgen. Über eine Verbindung 21 gelangen digitale Ausgangssignale des Steuergerätes 18 zur Endstufe 17.

Bei dem gemäß Figur 1 vorgesehenen Übertemperaturabgleichmittels eines digitalen Reglers läuft der Abgleich wie folgt ab: Das Sensorsignal, das an der Brücke abgreifbar ist, beispielsweise am Anschluß 22, ist ein Maß für die Temperatur des Sensors. Dieses Signal wird über den einfachen Verstärker 15 mit fester Verstärkung den Analog/Digital-Wandler des Steuergerätes 18 zugeführt. Aus der aktuellen Temperatur und dem beim Abgleich eingestellten Temperatursollwert berechnet das Steuergerät 18 die dem Sensorelement zuzuführende Leistung. Die Zuführung der Leistung erfolgt beispielsweise in Form eines pulsweiten modulierten Signales, das über die Endstufe 17 den Heizwiderstand 16 des Sensorelements 10 ansteuert.

Zur Durchführung des Sollwert-Abgleichs wird die Übertemperatur des Sensors indirekt aus Messungen bei einer definierten Referenztemperatur und den Bauelementeeigenschaften bestimmt, beispielsweise aus dem Temperaturverhalten des Widerstandes 11. Dabei ist beispielsweise folgendes Vorgehen denkbar: Es wird zunächst eine definierte Referenztemperatur eingestellt, beispielsweise eine Temperatur von 20°C. Der Mikrocontroller 18a des Steuergerätes 18 wird dann durch Stimulation über die serielle Schnittstelle in einen Abgleich-Modus gebracht. Danach wird die Endstufe 17 für die Sensorheizung ausgeschaltet. Der Befehl dafür kann über die serielle Schnittstelle 20 dem Mikrocontroller 18a des Steuergerätes 18 zugeführt werden. Als nächstes wird die Spannung an Punkt 22 bzw. an der zugehörigen Steuergeräteklemme gemessen. Weiterhin wird die Spannung, die an Punkt 22 bei Übertemperatur liegen müßte, berechnet. Es erfolgt dann ein langsames Erhöhen der Heizleistung bis die Sollspannung an der Klemme 22 erreicht wird. Diese Erhöhung der Heizleistung kann beispielsweise durch Änderung des Tastverhältnisses des pulsweitenmodulierten Signales, das der Endstufe zugeführt wird, erfolgen. Die Einleitung der Erhöhung der Heizleistung kann beispielsweise mittels einer entsprechenden Programmierung, die über die Schnittstelle 20 eingegeben wird, erfolgen.

Der zu der Sollspannung, die sich an der Steuergeräteklemme 22 einstellt, gehörende vom Analog-/Digital-Wandler 19 erfasste digitale Wert stellt den Reglersollwert dar. Dieser Sollwert kann in einen Festwertspeicher 23 programmiert werden und steht dann bei jedem Start wieder zur Verfügung. Bei der in Figur 1 dargestellten Anordnung und dem soeben beschriebenen Sollwert-Abgleich werden Fehler im Regelkreis, beispielsweise Offsetfehler des Verstärkers oder Wandlungsfehler des Analog-/Digital-Wandlers beim Abgleich eliminiert.

In Figur 2 ist ein Blockschaltbild für eine Anordnung mit Übertemperatur-Abgleich mittels analogem Regler dargestelt, wobei eine digitale Korrektur erfolgt. Im Unterschied zum Ausführungsbeispiel nach Figur 1 wird das Ausgangssignal des Verstärkers 15, der Bestandteil des Steuergerätes 18 ist, nicht dem Mikrocontroller 18a zugeführt, sondern als Heizstrom IH dem Heizwiderstand 16. Zur Sollwertkorrektur ist eine Verbindung 25 zwischen dem Mikrocontroller 18a und dem Verstärker 15 vorhanden. Der Verstärker 15 ist Bestandteil des Steuergerätes.

Beim Ausführungsbeispiel nach Figur 2 wird das Signal der Sensorbrücke an den Anschlüssen 22 und 24 dem analogen Regler 15 zugeführt, der unabhängig vom Mikrocontroller 18a den Heizwiderstand 16 des Sensorelements 10 kontinuierlich bestromt. Als Sollwert dient dabei die Spannung am zweiten Brückenzweig, bzw. an Klemme 24. Die vorgeschlagene Schaltung ist über eine digitale Schnittstelle 25 zwischen dem als Regler arbeitenden Verstärker 15 und dem Mikrocontroller 18a verbunden. Diese Schaltung variiert den Sollwert für den Regler durch Addition eines Spannungsbetrages in gewissen Grenzen. Das Einstellen den Sollwertes erfolgt dabei wie folgt:

zunächst wird wiederum eine definierte Referenztemperatur eingestellt, beispielsweise 20°C. Danach wird der Prozessor des Steuergerätes 18 durch Stimulation über die serielle Schnittstelle 20 in einen Abgleich-Modus gebracht. Danach wird der Regelkreis gesperrt, es wird also die Sensorheizung ausgeschaltet. Es wird dann eine definierte Referenztemperatur eingestellt und die sich zwischen den Steuergeräteklemmen 22 und 24 einstellende Brückenspannung gemessen. Anschließend wird die Brückenspannung bei Übertemperatur berechnet und der Regelkreis wieder freigegeben. Eine digitale Sollwertkorrektur erfolgt durch Stimulation über die serielle Schnittstelle, dabei wird der Sollwert solange verändert, bis die Sollbrückenspannung an den Steuergeräteklemmen erreicht wird. Der dann gefundene Wert stellt den Reglerkorrektursollwert dar. Dieser Korrektursollwert kann anschließend im Festwertspeicher 23 programmiert werden und muß bei jedem Start in den Regler geladen werden. Alternativ dazu wäre auch eine Speicherung des Korrektursollwertes im Regler selbst denkbar.

Als weitere Alternative eines digital abgleichbaren analogen Reglers ist eine Anordnung denkbar, bei der der Reglersollwert direkt vom Steuergerät vorgegeben wird. Bei einer solchen Anordnung könnte der Brückenzweig mit den Widerständen 12, 14 sowie dem Anschluß 24 entfallen. Eine eventuelle Mitführung des Sollwertes über der Ansauglufttemperatur könnte dabei durch den Mikrocontroller 18a des Steuergerätes 18 erfolgen, sofern die Ansauglufttemperatur erfaßt wird und dem Steuergerät 18 zugeführt wird.

### 2. Signalauswertung

Bei Sensoren muß im allgemeinen das vom Sensor gelieferte Sensorrohsignal verstärkt und an den Auswertebereich nachfolgender Stufen angepaßt werden. Meist ist auch eine sensorspezifische Korrektur auf Grund von Streuungen der Sensorwerte erforderlich. Dazu werden beispielsweise Anpassungen derart durchgeführt, daß Sensorelemente, beispielsweise Widerstände durch Laserabgleich optimiert werden. In einer Erweiterung dieser Vorgehensweise lassen sich programmierte Abgleiche vor Ort durchführen. Das im folgenden beschriebene Abgleichverfahren ermöglicht durch Verwendung des Speichers eines Steuergerätes einen einfacheren und zugleich genaueren Abgleich. Es soll nun anhand des in Figur 3 dargestellten Blockschaltbildes für einen digitalen Abgleich des analogen Verstärkers erläutert werden.

Das zu verstärkende Signal des Sensoreelements 10a, das beim Ausführungsbeispiel nach Figur 3 die Widerstände 24, 25, 26 und 27 umfaßt, wird durch einen digital einstellbaren analogen Verstärker 28 verstärkt. Das verstärkte Signal wird dem Analog-/Digitalwandler 19 des Steuergerätes 18 zugeführt. Aus der im Speicher 23 abgelegten Kennlinie berechnet das Steuergerät 18 bzw. der Mikrocontroller 18a des Steuergerätes 18 das entsprechende Ausgangssignal, das für weitere Regelzwecke benötigt wird. Wird mit Hilfe des Sensorelements 10 die angesaugte Luftmasse einer Brennkraftmaschine ermittelt, berechnet das Steuergerät aus den zugeführten Luftmassen beispielsweise die Öffnungszeiten für die Einspritzventile. Nachfolgend wird beschrieben, wie durch Benutzung des Steuergerätes 18 der Brennkraftmaschine, des Speichers 23 und der im Steuergerät vorhandenen seriellen Schnittstelle 20 ein einfacher Abgleich realisiert werden kann. Hierbei wird von einem Sensor, in diesem Fall von einem Luftmassenmesser und einem Steuergerät der Brennkraftmaschine ausgegangen, die zusammen auf ein Ansaugrohr der Brennkraftmaschine montiert sind.

Für den Abgleich sind zwei Alternativen wählbar. Eine erste Alternative besteht darin, die Sollkennlinie in einem Speicher des Mikrocontrollers 18a des Steuergerätes 18 abzulegen. Die Sollkennlinie liegt somit stets vor und der Verstärker wird so beeinflußt, daß die tatsächliche Kennlinie nach Abgleich mit der Sollkennlinie möglichst zur Deckung kommt.

In einer zweiten Alternative wird der Verstärker so beeinflußt, daß die tatsächliche Kennlinie den Auswertebereich des Analog-/Digital-Wandlers möglichst optimal nutzt. Es erfolgt danach eine Ablage der tatsächlichen Kennlinie im Speicher mit möglichst vielen Stützstellen. Dieses Verfahren ist aufwendiger als das erstgenannte, es hat jedoch eine wesentlich größerere Genauigkeit bei der Luftmassenerfassung zur Folge. Bei diesem letzten Verfahren können beispielsweise auch Abweichungen des Luftführungssystemes, also des Saugrohres kompensiert werden.

### a) Digital programmierbarer Verstärker

Wird als Verstärker ein digital programmierbarer Verstärker eingesetzt, kann sowohl der Offset als auch die Verstärkung über eine Schnittstelle zwischen dem Verstärker und dem Mikroprozessor digital eingestellt und dauerhaft fixiert werden. Dabei soll bei dem nun beschriebenen Verfahren die Programmierung der Sensorkennlinie durch den Mikroprozessor selbst und nicht durch einen externen Rechner stattfinden. Es ist dann folgender Abgleichvorgang möglich:

Der Mikroprozessor wird durch Stimulation über die serielle Schnittstelle in den Abgleichmodus gebracht. Danach wird ein Wert eingestellt, der der Luftmasse "0" entspricht. Im nächsten Schritt erfolgt eine Stimulation über die serielle Schnittstelle um die digitale Offsetkorrektur über die Schnittstelle zwischen dem Mikroprozessor und dem Verstärker zu schicken und es wird dieser Offsetkorrekturwert solange verändert bis der vom Analog-/Digital-Wandler erfasste Wert dem gewünschten Sollwert entspricht. Der so erhaltene Wert wird als Offsetkorrekturwert in den Verstärker einprogrammiert. Danach wird ein definierter Luftmassenfluß eingestellt und es erfolgt eine Stimulation über die serielle Schnittstelle um die digitale Verstärkungskorrektur über die Schnittstelle zwischen dem Mikroprozessor (controller) und dem Verstärker zu schicken. Dieser Verstärkungskorrekturwert wird dann solange verändert bis der vom Analog-/Digital-Wandler erfaßte Wert dem gewünschten Sollwert entspricht. Der so erhaltene Wert wird als Verstärkungskorrekturwert in den Verstärker einprogrammiert.

### b) Digital einstellbarer Verstärker

Der Abgleichvorgang bei Verwendung eines digital einstellbaren Verstärkers läuft im Prinzip wie bei dem unter a) beschriebenen Verfahren. Im Unterschied zum Verfahren nach a) wird jedoch der ermittelte Offset- und Verstärkungskorrekturwert nicht im Verstärker fixiert, sondern die Korrekturwerte werden im Speicher des Mikroprozessors bzw. controllers abgelegt. Diese abgelegten Werte werden dann beispielsweise beim Systemstart in den Verstärker geladen und bei der Auswertung berücksichtigt. Diese Anordnung ermöglicht es, daß zumindest der Offsetkorrekturwert während des Betriebes des Steuergerätes geändert werden kann. Durch diese Adaption des Offsets im Betriebszustand "Luftmasse 0" können Temperatur- und Langzeitdriften kompensiert werden.

Die in den Figuren 1 bzw. 2 und 3 dargestellten Sensorelemente 10 und 10a können Bestandteil eines umfassenden Sensorelemts sein. Sie sind dabei thermisch gekoppelt und befinden sich beispielsweise auf einem gemeinsamen Chip. In Figur 4 ist ein solches Ausführungsbeispiel dargestellt.

Das Sensorelement des Ausführungsbeispiels nach Figur 4 ist mit 10b bezeichnet und ist im Prinzip aus der deutschen Patentanmeldung DE-P 19 54 2143.4 bekannt. Die Widerstände 11 und 12 sind temperaturabhängige Widerstände, der Widerstand 11 mißt die Heizertemperatur und der Widerstand 12 die Lufttemperatur bzw. die Temperatur des zu erfassenden Mediums. Der Widerstand 16 ist der Heizerwiderstand, er wird durch den Heizerstrom IH auf die gewünschte Temperatur aufgeheizt. Die Regelung des Heizerstromes IH erfolgt mit Hilfe der als Bestandteil des Steuergerätes 18 dargestellten Schaltungsanordnung 30.

Die Widerstände 24, 25, 26 und 27 bilden die eigentliche Meßschaltung, die eine Temperaturdifferenzbrücke (ΔT - Brücke) ist. Die Widerstände 24 und 27 sind, bezogen auf die Strömungsrichtung des zu erfassenden Mediums, abwärts vom Heizwiderstand 16 angeordnet, die Widerstände 25 und 26 dagegen aufwärts. Die sich infolge der unterschiedlich starken Kühlung einstellende Temperaturdifferenz zwischen den abwärts und aufwärts angeordneten Widerständen führt zu einer Brückenspannung, die über den als Potentiometer ausgestalteten Widerstand 29 ausgekoppelt wird und dem Steuergerät 18 zur weiteren Verarbeitung zugeführt wird. Ausgehend von der sich einstellenden Brückenschaltung ermittelt das Steuergerät 18 die Masse des strömenden Mediums.

Die Steuergerät 18 integrierte Auswerteschaltung 18 läßt sich unterteilen in eine analoge Regelschaltung 30, die den Heizstrom IH in Abhängigkeit von der Differenz der Heizertemperatur und der Temperatur des zu erfassenden Mediums, beispielsweise Luft, regelt, wobei zur Erfassung dieser beiden Temperaturen wie bereits erwähnt, die Widerstände 11 und 12 vorgesehen sind. Der zweite Teil der Auswerteschaltung betrifft die Signalverstärkung 31. Beide Schaltungsteile 30 und 31 sind im Steuergerät integriert.

Die Regelschaltung umfaßt einen Operationsverstärker 15, dem die Temperaturdifferenzspannung zugeführt wird. Der Ausgang des Operationsverstärkers 15 ist direkt mit dem Heizwiderstand 16 verbunden und liefert den Heizstrom IH. Die Widerstände 13 und 14 sind bei herkömmlichen Sensoren Bestandteil des Sensorelements. Beim Ausführungsbeispiel nach Figur 4 sind sie dagegen im Steuergerät integriert, sie bilden mit den Widerständen 11 und 12 eine Brückenschaltung. Über die Widerstände 13 und 14 wird die Referenzspannung bzw. Versorgungsspannung UV zugeführt. Weitere Schaltungsteile, die mit dem Operationsverstärker 15 in Verbindung stehen, sind ein Widerstand 32, der zwischen dem Ausgang des Operationsverstärkers und dem invertierenden Eingang liegt, sowie Kondensatoren 33, 34 und 35, die jeweils zwischen einem der Eingänge des Operationsverstärkers oder dem Ausgang des Operationsverstärkers 15 und Masse liegen.

Die Signalverstärkungsschaltung 31 umfaßt einen ersten Schaltungsteil, in dem eine Spannung erzeugt wird, die dem Wert der Temperatur der Ansaugluft TA entspricht. Dieser Schaltungsteil besteht aus einem Operationsverstärker 36, dessen invertierendem Eingang über den Widerstand 37, die am nicht invertierenden Eingang des Operationsverstärkers 15 liegende Spannung zugeführt wird. Dem nicht invertierenden Eingang des Operationsverstärkers 36 wird über den spannungsteil 38, 39 die Referenzspannung UV zugeführt. Zwischen dem Ausgang des Operationsverstärkers und dem nicht invertierenden Eingang liegt der Rückkopplungswiderstand 40. Weiterhin ist der Ausgang des Operationsverstärkers über den Widerstand 41 mit dem Analog-/Digitalwandler 19 verbunden. Ein Kondensator 42 liegt zwischen dem betreffenden Eingang des Analog-/Digitalwandlers 19 und Masse.

Der Operationsverstärker 28 sowie die zugehörende Beschaltung stellt die Signalverstärkungsschaltung für das Ausgangssignal der ΔT -Brücke dar. Im einzelnen wird dem Operationsverstärker 28 über den Widerstand 43 die Referenzspannung UV zugeführt. Weiterhin ist der nicht invertierende Eingang des Operationsverstärkers über den Widerstand 44 mit beiden Seiten des Widerstandes 29 verbunden, der Widerstand 45 führt auf Masse. Der nicht invertierende Eingang des Operationsverstärkers 28 ist über den Widerstand 46 mit dem Verbindungspunkt zwischen den Widerständen 24 und 26 verbunden. Zwischen den Widerständen 44 und 46, über die die Diagonalspannung der ΔT -Brücke zum Operationsverstärker 28 geführt wird, liegt ein Kondensator 47. Weitere Kondensatoren 48, 49 liegen zwischen Versorgungsspannung und Masse bzw. zwischen dem Widerstand R46 und Masse.

Zwischen dem Ausgang des Operationsverstärkers und dem nicht invertierenden Eingang liegt der Widerstand 50. Weiterhin ist der Ausgang des Operationsverstärkers 28 über den Widerstand 51 mit einem weiteren Eingang des Analog/Digital-Wandlers 19 verbunden, zwischen diesem Eingang und Masse liegt ein Kondensator 52. An diesem Eingang wird die verstärkte Ausgangsspannung der ΔT -Brücke erhalten. Sie stellt ein Maß für die Masse m des strömenden Mediums, beispielsweise der strömenden Luft dar. Der Analog-/Digital-Wandler 19 ist üblicherweise Bestandteil desRechners bzw. eines Mikrocontrollers des Steuergerätes 18.

Damit das in Figur 4 dargestellte Ausführungsbeispiel optimal arbeiten kann, sollte das dem strömenden Medium augesetzte Sensorelement mit einer Halterung direkt am Steuergerät befestigt werden, es ist jedoch auch möglich, nur eine Kabelverbindung vorzusehen, die analoge Regelschaltung 30 sowie die Signalverstärkung 31 sind jedenfalls im Steuergerät integriert. Weder die Regel- noch die Verstärkungsschaltung werden abgeglichen. Die erforderlichen Korrekturen werden vom Steuergerät selbst vorgenommen. Es sind dabei Korrekturdaten des Signales des strömenden Mediums, beispielsweise des Luftmassensignales, in einem Eprom-Speicher des Steuergerätes abgelegt, auf die das Steuergerät jederzeit zugreifen kann. Der Sensor wird also ohne Abgleich im Rahmen der Toleranzen der einzelnen Bauteile betrieben, dies stellt eine wesentliche Vereinfachung gegenüber herkömmlichen Systemen dar.

Durch eine Messung des Ausgangssignals bei verschiedenen Massen des strömenden Mediums (verschiedenen Luftmassen) und bei verschiedenen Temperaturen des strömenden Mediums (der Ansaugluft) wird ein Korrekturkennfeld erstellt, mit dessen Hilfe die Kennliniengenauigkeit erreicht wird. Dieses Korrekturkennfeld ist in einem Speicher des Steuergerätes abgelegt.

Als Sensorelement 10b kann beispielsweise ein mikromechanischer Sensor eingesetzt werden, der aus einem einzigen Chip besteht. Zur Bestimmung des strömenden Mediums wird die Temperaturdifferenz der Widerstände vor und nach dem Heizer, bezogen auf die Strömungsrichtung des zu erfassenden strömenden Mediums, ausgewertet. Die Temperatur des strömenden Mediums, also beispielsweise die Ansauglufttemperatur, kann aus der Regelschaltung direkt ermittelt werden.

## Patentansprüche

1. Einrichtung zur Bestimmung des Durchsatzes eines strömenden Mediums bei einer Brennkraftmaschine mit einem Sensor, der ein Sensorelement (10, 10a, 10b) umfaßt, das durch Zuführen eines Heizstromes zu wenigstens einem Heizwiderstand (16) auf gegenüber dem strömenden Medium erhöhte Temperaturen heizbar ist und vom strömenden Medium abgekühlt wird, mit Regelmitteln (17, 18a), die den Heizstrom regeln und einer Auswerteelektronik, die einen Microcontroller (18a) umfaßt und aus der Temperaturdifferenz den Durchsatz des strömenden Mediums ermittelt, **dadurch gekennzeichnet, daß** die Auswerteelektronik in einem Steuergerät (18) der Brennkraftmaschine angeordnet ist, dass der Microcontroller (18a) aus der ermittelten Luftmasse für die Regelung der Brennkraftmaschine erforderliche Daten und Ansteuersignale berechnet und auch für die Regelung der Brennkraftmaschine verantwortlich ist und daß der Sensor und das Steuergerät (18) sich zueinander in räumlicher Nähe befinden oder daß der Sensor mit Ausnahme des Sensorelements (10, 10a, 10b) Bestandteil des Steuergerätes (18) ist und daß die Auswerteelektronik über eine serielle Schnittstelle des Steuergerätes abgleichbar ist.

2. Einrichtung nach Anspruch 1, **dadurch gekennzeichnet, daß** bei der Ermittlung des Durchsatzes des strömenden Mediums zusätzlich die Größe des zugeführten Heizstromes berücksichtigt wird.

3. Einrichtung nach Anspruch 1 oder 2, **dadurch gekennzeichnet, daß** die Regelmittel einen digitalen Regler umfassen, mit einem digital einstellbaren Sollwert, wobei die Programmierung des digitalen Reglers über eine serielle Schnittstelle erfolgt und die Speicherung des Sollwertes im Festwertspeicher des Microcontrollers erfolgt.

4. Einrichtung nach Anspruch 1 oder 2, **dadurch gekennzeichnet, daß** die Regelmittel einen analogen Regler mit digital korrigierbarem Sollwert umfassen, daß die Programmierung über eine serielle Schnittstelle erfolgt und die Speicherung des Sollwertes im Festspeicher des Microcontrollers oder dauerhaft im Regler selbst erfolgt und der Regler bei Systemstart initialisiert wird.

5. Einrichtung nach einem der vorhergehenden Ansprüche, **dadurch gekennzeichnet, daß** ein analoger Verstärker vorhanden ist, mit digital einstellbarem Offset und digital einstellbarer Verstärkung, daß die Programmierung über eine serielle Schnittstelle erfolgt und der Sollwert im Festwertspeicher des Microcontrollers gespeichert wird und daß der Verstärker beim Systemstart initialisiert wird.

6. Einrichtung nach Anspruch 5, **dadurch gekennzeichnet, daß** die Speicherung der Sollwerte im Verstärker erfolgt.

7. Einrichtung nach Anspruch 5, **dadurch gekennzeichnet, daß** zusätzlich ein Eigenabgleich durchgeführt wird, der dann erfolgt, wenn eine Betriebszustand erkannt wird, bei dem die Mediums im wesentlichen 0 ist und aus den dann erhaltenen Größen Korrekturwerte gewonnen werden.

8. Einrichtung nach einem der vorhergehenden Ansprüche, **dadurch gekennzeichnet, daß** ein digitaler Abgleich durchgeführt wird, bei dem die Sensorkennlinie an vorgebbar vielen Kennlinienpunkten angefahren wird und die zu jedem Kennlinienpunkt gehörenden, vom Analog-/Digital-Wandler erfaßten Werte im Festspeicher des Microcontrollers fixiert werden.

9. Einrichtung nach einem der vorhergehenden Ansprüche, **dadurch gekennzeichnet, daß** eine Korrektur des Sensortemperaturfehlers erfolgt, wobei die Temperatur des strömenden Mediums ermittelt wird und die Offset- und Verstärkungskorrektur in Abhängigkeit davon temperaturabhängig eingestellt wird.

10. Einrichtung nach einem der vorhergehenden Ansprüche, **dadurch gekennzeichnet, daß** wenigstens ein Widerstand - bezogen auf die Strömungsrichtung unterhalb und wenigstens ein Widerstand oberhalb vom Heizelement - angeordnet ist.

## Claims

1. Device for determining the flow rate of a flowing medium in an internal-combustion engine, with a sensor which comprises a sensor element (10, 10a, 10b) that can be heated to higher temperatures than the flowing medium, by delivering a heating current to at least one heating resistor (16), and is cooled by the flowing medium, with regulating means (17, 18a) which regulate the heating current, and evaluation electronics which comprise a microcontroller (18a) and determine the flow rate of the flowing medium from the temperature difference, **characterized in that** the evaluation electronics are arranged in a control unit (18) of the internal-combustion engine, and **in that** the microcontroller (18a) calculates the data and drive signals necessary for controlling the internal-combustion engine from the air mass which has been determined, and is also responsible for regulating the internal-combustion engine, and **in that** the sensor and the control unit (18) are situated physically close to one another or **in that** the sensor, with the exception of the sensor element (10, 10a, 10b), is part of the control unit (18), and **in that** the evaluation electronics can be calibrated via a serial interface of the control unit.

2. Device according to Claim 1, **characterized in that** the value of the heating current being delivered is also taken into account when determining the flow rate of the flowing medium.

3. Device according to Claim 1 or 2, **characterized in that** the regulating means comprise a digital regulator with a digitally adjustable setpoint value, the digital regulator being programmed via a serial interface and the setpoint value being stored in a read-only memory of the microcontroller.

4. Device according to Claim 1 or 2, **characterized in that** the regulating means comprise an analogue regulator with a digitally correctable setpoint value, **in that** the programming is carried out via a serial interface and the setpoint value is stored in the read-only memory of the microcontroller or permanently in the regulator itself, and the regulator is initialized during the system start.

5. Device according to Claim 1 or 2, **characterized in that** there is an analogue amplifier with a digitally adjustable offset and a digitally adjustable gain, **in that** the programming is carried out via a serial interface and the setpoint value is stored in the read-only memory of the microcontroller, and **in that** the amplifier is initialized during the system start.

6. Device according to Claim 5, **characterized in that** the setpoint values are stored in the amplifier.

7. Device according to Claim 5, **characterized in that** self-calibration is also carried out, which takes place when an operating state in which the medium is substantially 0 is detected, and correction values are obtained from the values acquired **in that** case.

8. Device according to one of the preceding claims, **characterized in that** digital calibration is carried out, in which the sensor characteristic is sampled at a predeterminable number of characteristic points and the values belonging to each characteristic point, which have been recorded by the analogue/digital converter, are fixed in the read-only memory of the microcontroller.

9. Device according to one of the preceding claims, **characterized in that** a correction of the sensor temperature error is carried out, the temperature of the flowing medium being determined and the offset and gain correction being adjusted accordingly as a function of temperature.

10. Device according to one of the preceding claims, **characterized in that** - in relation to the flow direction - at least one resistor is arranged below the heating element and at least one resistor is arranged above the heating element.

## Revendications

1. Dispositif pour la détermination du débit d'un fluide en écoulement d'un moteur à combustion interne comportant un détecteur qui comprend un organe de détection (10, 10a, 10b) qui, par apport d'un courant de chauffage à au moins une résistance de chauffage (16), peut être chauffé à une température augmentée par rapport au fluide en écoulement et qui est refroidi par le fluide en écoulement, équipé de moyens de régulation (17, 18a) qui régulent le courant de chauffage et d'une électronique d'exploitation qui comprend un microcontrôleur (18a) et détermine le débit du fluide en écoulement à partir de la différence de température,
**caractérisé en ce que**
l'électronique d'exploitation est disposée dans un appareil de commande du moteur à combustion interne, le microcontrôleur (18a) calcule les données et signaux de commande nécessaires pour la régulation du moteur à combustion interne à partir de la masse d'air déterminée et assume également la régulation du moteur à combustion interne, et le détecteur et l'appareil de commande (18) se trouvent spatialement proches l'un de l'autre sans que le détecteur, à l'exception des organes de détection (10, 10a, 10b), soit une partie constituante de l'appareil de commande (18), et **en ce que** l'électronique d'exploitation peut être alignée au travers d'une interface série de l'appareil de commande.

2. Dispositif selon la revendication 1,
**caractérisé en ce que**
la détermination du débit du fluide en écoulement prend de plus en compte, la grandeur du courant de chauffage fourni.

3. Dispositif selon la revendication 1 ou 2,
**caractérisé en ce que**
les moyens de régulation comprennent un régulateur numérique avec une valeur de consigne pouvant être réglée numériquement, la programmation du régulateur numérique s'effectuant au travers d'une interface série et l'enregistrement de la valeur de consigne s'effectuant dans la mémoire non volatile du microcontrôleur.

4. Dispositif selon la revendication 1 ou 2,
**caractérisé en ce que**
les moyens de régulation comprennent un régulateur analogique avec une valeur de consigne pouvant être corrigée numériquement, la programmation du régulateur numérique s'effectue au travers d'une interface série et l'enregistrement de la valeur de consigne s'effectue dans la mémoire non volatile du microcontrôleur ou, de manière permanente, dans le régulateur lui-même, et le régulateur est initialisé au démarrage du système.

5. Dispositif selon l'une quelconque des revendications précédentes,
**caractérisé en ce qu'**
un amplificateur analogique existe dont l'offset peut se régler numériquement et dont l'amplification peut se régler numériquement, la programmation s'effectue au travers d'une interface série et la valeur de consigne est enregistrée dans la mémoire non volatile du microcontrôleur, et l'amplificateur est initialisé au démarrage du système.

6. Dispositif selon la revendication 5,
**caractérisé en ce que**
l'enregistrement de la valeur de consigne s'effectue dans l'amplificateur.

7. Dispositif selon la revendication 5,
**caractérisé en ce qu'**
en outre on effectue une autocompensation après avoir détecté un état de fonctionnement dans lequel le fluide est, pour l'essentiel, 0 et après avoir obtenu des valeurs de correction à partir des grandeurs alors reçues.

8. Dispositif selon l'une quelconque des revendications précédentes,
**caractérisé en ce qu'**
une compensation numérique est réalisé, pour laquelle la courbe caractéristique du détecteur est approchée d'une quantité pouvant être prédéterminée de points de courbe caractéristique et les valeurs acquises par le convertisseur analogique/numérique qui appartiennent à chaque point de la courbe caractéristique sont fixées dans la mémoire non volatile du microcontrôleur.

9. Dispositif selon l'une quelconque des revendications précédentes,
**caractérisé en ce qu'**
une correction de l'erreur de température du détecteur est réalisée, la température du fluide en écoulement étant acquise et la correction d'offset et d'amplification étant réglée en fonction de cela, en fonction de la température.

10. Dispositif selon l'une quelconque des revendications précédentes,
**caractérisé en ce qu'**
on dispose en se rapportant au sens de l'écoulement, au moins une résistance en dessous et au moins une résistance au-dessus de l'élément de chauffage.
